(19) Europäisches Patentamt
European Patent Office
Office européen des brevets

(11) **EP 4 407 550 A1**

(12) **EUROPEAN PATENT APPLICATION**
published in accordance with Art. 153(4) EPC

(43) Date of publication:
**31.07.2024 Bulletin 2024/31**

(21) Application number: **22882382.9**

(22) Date of filing: **28.07.2022**

(51) International Patent Classification (IPC):
**G06Q 50/26** (2024.01)

(52) Cooperative Patent Classification (CPC):
Y02W 90/00

(86) International application number:
**PCT/CN2022/108660**

(87) International publication number:
**WO 2023/065760 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.10.2021 CN 202111229746**

(71) Applicants:
• **Guangdong Brunp Recycling Technology Co.,
Ltd
Guangdong 528137 (CN)**
• **Hunan Brunp Recycling Technology Co., Ltd.
Changsha, Hunan 410600 (CN)**
• **Hunan Brunp EV Recycling Co., Ltd.
Changsha, Hunan 410600 (CN)**

(72) Inventors:
• **YU, Haijun
Foshan, Guangdong 528137 (CN)**
• **ZHANG, Congguang
Foshan, Guangdong 528137 (CN)**
• **XIE, Yinghao
Foshan, Guangdong 528137 (CN)**
• **OU, Yannan
Foshan, Guangdong 528137 (CN)**
• **WU, Benben
Foshan, Guangdong 528137 (CN)**
• **LI, Changdong
Foshan, Guangdong 528137 (CN)**

(74) Representative: **Primiceri, Maria Vittoria et al
Praxi Intellectual Property S.p.A.
Via Leonida Bissolati, 20
00187 Roma (IT)**

(54) **METHOD AND APPARATUS FOR PREDICTING QUANTITY OF SCRAPPED GLOBAL
TRACTION BATTERIES**

(57) A method and apparatus for predicting the quantity of scrapped global traction batteries. The method comprises: estimating future global vehicle sales by means of acquiring historical vehicle sales data, and estimating, according to a new energy vehicle penetration rate, new energy vehicle sales in the future global vehicle sales (101); estimating a global traction battery shipment according to the new energy vehicle sales, and calculating same according to the quantity of installed traction batteries (102); establishing an estimation model for a conventional quantity of scrapped global traction batteries according to the global traction battery shipment, and acquiring the conventional quantity of scrapped global traction batteries (103); and acquiring the quantity of global traction battery scraps and a global traction battery stock change and scrappage quantity, and in view of the conventional quantity of scrapped global traction batteries, acquiring a prediction result of the quantity of scrapped global traction batteries (104). Accurate prediction of the quantity of scrapped global traction batteries is realized.

Figure 1

## Description

## FIELD

The present disclosure relates to the technical field of traction battery scrapping, and in particular to a method and a device for predicting a global scrapping quantity of traction batteries.

## BACKGROUND

Recycle and reuse of traction batteries are helpful to reduce environmental pollution, and promote comprehensive utilization of resources and development of circular economy. In addition, disposing traction batteries in an environmental sound manner conforms to requirements of sustainable development. The "surplus value" of failed traction batteries may be fully used after recycling. A global market scale of traction battery recycling reached 111,783 tons in 2018, and is expected to reach 641,595 tons in 2025, with a predicted annual compound growth rate of 26.57% during the period.

At present, the quantity of recycled traction batteries is much lower than the quantity of scrapped traction batteries, mainly for the following reasons. Firstly, the channels, systems, and institutions for recycling traction batteries are not well established, resulting in that most of used batteries, especially batteries for digital products, are not recycled. Secondly, laws and regulations and supervisions on recycle of traction batteries need to be improved. Although the subjects for recycle have been clarified, the recycle is not strictly implemented. Thirdly, some manufacturers fail to realize recycle and reuse of batteries due to lack of techniques or economic benefits. Fourthly, the batteries theoretically out of service life are still in use in consideration of costs, resulting in an actual total scrapping quantity much lower than a theoretical scrapping quantity, and thereby resulting in a decreased recycle.

Therefore, an accurate prediction of a global scrapping quantity of traction batteries is beneficial for enterprises and governments to make a rational deployment of the battery recycle industry, which promotes a green, low-carbon and sustainable development of the battery industry and the new energy vehicle industry.

## SUMMARY

The present disclosure is to provide a method and device for predicting a global scrapping quantity of traction batteries, which obtains an overall global scrapping quantity of traction batteries by obtaining estimation results for a global regular scrapping quantity of traction batteries, a global scrapping quantity of leftover material of traction batteries and a global replacement scrapping quantity of traction batteries, so as to realize an accurate prediction for a global scrapping quantity of traction batteries and thereby improve deployment of the battery recycle industry.

A method for predicting a global scrapping quantity of traction batteries is provided. The method includes: obtaining data of historical sales of vehicles to estimate future global sales of vehicles, and estimating, based on a market penetration rate of new energy vehicles, sales of new energy vehicles contained in the future global sales of vehicles; estimating an installation quantity of traction batteries based on the sales of new energy vehicles, and calculating a global shipment of traction batteries based on the installation quantity of traction batteries; obtaining a global regular scrapping quantity of traction batteries by establishing, based on the global shipment of traction batteries, an estimation model of the global regular scrapping quantity of traction batteries; and obtaining a global scrapping quantity of leftover material of traction batteries and a global replacement scrapping quantity of traction batteries, and obtaining a prediction result of the global scrapping quantity of traction batteries based on the global regular scrapping quantity of traction batteries, the global scrapping quantity of leftover material of traction batteries and the global replacement scrapping quantity of traction batteries.

In a further embodiment, the obtaining data of historical sales of vehicles to estimate future global sales of vehicles, and estimating, based on a market penetration rate of new energy vehicles, sales of new energy vehicles contained in the future global sales of vehicles includes: obtaining data of historical annual sales of vehicles within a preset range of past years, and estimating future global annual sales of vehicles within the preset range of future years; obtaining sales of new energy vehicles in the historical annual sales of vehicles within the preset range of past years, and calculating annual market penetration rates of new energy vehicles within the preset range of past years; and estimating the sales of new energy vehicles contained in the future global annual sales of vehicles within the preset range of future years, based on the annual market penetration rates of new energy vehicles within the preset range of past years.

In a further embodiment, the obtaining a global regular scrapping quantity of traction batteries by establishing, based on the global shipment of traction batteries, an estimation model of the global regular scrapping quantity of traction batteries includes: obtaining, based on the global shipment of traction batteries, a shipment year corresponding to the global shipment of traction batteries and a scrapping probability corresponding to the shipment year; creating the estimation model of the global regular scrapping quantity of traction batteries based on the global shipment of traction batteries and the scrapping probability corresponding to the shipment year; and obtaining the global regular scrapping quantity of traction batteries through the estimation model of the global regular scrapping quantity of traction batteries, and calculating a mass of the global regular scrapping quantity of traction batteries.

In a further embodiment, the obtaining a global scrapping quantity of leftover material of traction batteries and a global replacement scrapping quantity of traction batteries includes: obtaining a ratio of a global quantity of leftover material of traction batteries to the global shipment of traction batteries, and obtaining the global scrapping quantity of leftover material of traction batteries based on the ratio and the global regular scrapping quantity of traction batteries; and calculating the global replacement scrapping quantity of traction batteries based on a preset formula of global replacement scrapping quantity of traction batteries.

A device for predicting a global scrapping quantity of traction batteries is further provided in the present disclosure. The device includes an estimation module for sales of new energy vehicles, a calculation module for global shipment of traction batteries, an acquisition module for global regular scrapping quantity of traction batteries, and a prediction module for global scrapping quantity of traction battery. The estimation module for sales of new energy vehicles is configured to obtain data of historical sales of vehicles to estimate future global sales of vehicles, and estimate, based on a market penetration rate of new energy vehicles, sales of new energy vehicles contained in the future global sales of vehicles. The calculation module for global shipment of traction batteries is configured to estimate an installation quantity of traction batteries based on the sales of new energy vehicles, and calculate a global shipment of traction batteries based on the installation quantity of traction batteries. The acquisition module for global regular scrapping quantity of traction batteries is configured to obtain a global regular scrapping quantity of traction batteries by establishing, based on the global shipment of traction batteries, an estimation model of the global regular scrapping quantity of traction batteries. The prediction module for global scrapping quantity of traction battery is configured to obtain a global scrapping quantity of leftover material of traction batteries and a global replacement scrapping quantity of traction batteries, and obtain a prediction result of the global scrapping quantity of traction batteries based on the global regular scrapping quantity of traction batteries, the global scrapping quantity of leftover material of traction batteries and the global replacement scrapping quantity of traction batteries.

In a further embodiment, the estimation module for sales of new energy vehicles is configured to obtain data of historical annual sales of vehicles in a preset range of past years, and estimate future global annual sales of vehicles within the preset range of future years; obtain sales of new energy vehicles in the historical annual sales of vehicles within the preset range of past years, and calculate annual market penetration rates of new energy vehicles within the preset range of past years; and estimate the sales of new energy vehicles contained in the future global annual sales of vehicles within the preset range of future years, based on the annual market penetration rates of new energy vehicles within the preset range of past years.

In a further embodiment, the acquisition module for global regular scrapping quantity of traction batteries is configured to: obtain, based on the global shipment of traction batteries, a shipment year corresponding to the global shipment of traction batteries and a scrapping probability corresponding to the shipment year; create the estimation model of the global regular scrapping quantity of traction batteries based on the global shipment of traction batteries and the scrapping probability corresponding to the shipment year; and obtain the global regular scrapping quantity of traction batteries through the estimation model of the global regular scrapping quantity of traction batteries, and calculate a mass of the global regular scrapping quantity of traction batteries.

In a further embodiment, the prediction module for global scrapping quantity of traction battery is configured to: obtain a ratio of a global scrapping quantity of leftover material of traction batteries to the global shipment of traction batteries, and obtain the global scrapping quantity of leftover material of traction batteries based on the ratio and the global regular scrapping quantity of traction batteries; and calculate the global replacement scrapping quantity of traction batteries based on a preset formula of global replacement scrapping quantity of traction batteries.

A terminal device is further provided in the present disclosure. The terminal device includes a processor, a memory, and a computer program stored in the memory for being executed by the processor. The processor is configured to execute the computer program to perform the method for predicting a global scrapping quantity of traction batteries according to any one of the above embodiments.

A computer-readable storage medium is further provided in the present disclosure. The computer-readable storage medium stores a computer program. The computer program, when being executed, controls a device installed with the computer-readable storage medium to perform the method for predicting a global scrapping quantity of traction batteries according to any one of the above embodiments.

Compared with the conventional technology, the method and device for predicting a global scrapping quantity of traction batteries in the present disclosure has beneficial effects described below.

The future sales of new energy vehicles are estimated based on historical data, so that the estimation is accurate. The installation quantity of traction batteries and the shipment of traction batteries are calculated based on the estimated future sales of new energy vehicles, so that a future quantity of traction batteries to be produced can be accurately obtained and monitored. Based on the installation quantity of traction batteries and the shipment of traction batteries, estimation results of the global regular scrapping quantity of traction batteries, the global scrapping quantity of leftover material of traction batteries and the global replacement scrapping quantity of traction batteries are obtained to obtain the global scrapping quantity of traction batteries, which realizes an accurate prediction for the global scrapping quantity of traction batteries, and thus can improve deployment of the battery recycle industry, and promote a green, low-carbon and sustainable development of the battery industry and the new energy vehicle industry.

**BRIEF DESCRIPTION OF THE DRAWINGS**

Figure 1 is a schematic flowchart of a method for predicting a global scrapping quantity of traction batteries according to an embodiment of the present disclosure; and

Figure 2 is a schematic structural diagram of a device for predicting a global scrapping quantity of traction batteries according to an embodiment of the present disclosure.

**DETAILED DESCRIPTION**

The technical solutions in the embodiments of the present disclosure are clearly and completely described in the following with reference to the accompanying drawings in the present disclosure. Apparently, the embodiments described herein are only a part, rather than all, of the embodiments of the present disclosure. Any other embodiment obtained by those skilled in the art based on the embodiments in the present disclosure without any creative effort shall fall within the protection scope of the present disclosure.

First embodiment

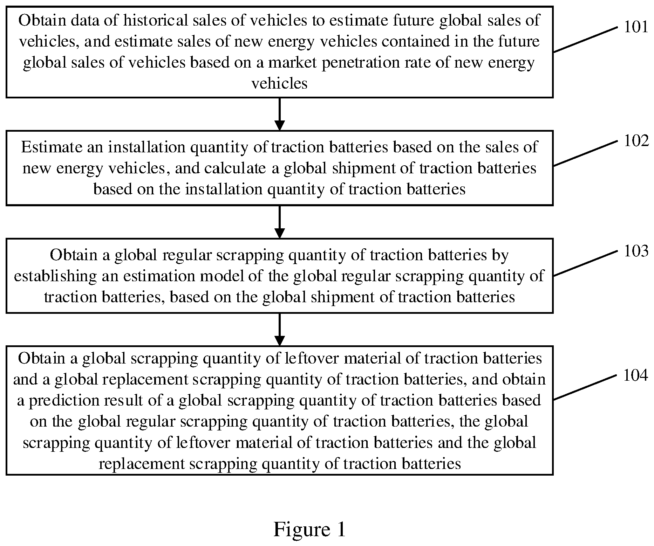

Figure 1 is a schematic flowchart of a method for predicting a global scrapping quantity of traction batteries according to an embodiment of the present disclosure. As shown in Figure 1, the method includes steps 101 to 104, which are described below.

In step 101, data of historical sales of vehicles is obtained to estimate future global sales of vehicles, and sales of new energy vehicles contained in the future global sales of vehicles is estimated based on a market penetration rate of new energy vehicles.

In some embodiments, annual data of historical national per capita sales of vehicles in a preset range of past years and annual growth rate of the national per capita disposable income are obtained and taken into a pre-trained model, to estimate, through a formula of vehicle sales preset in the model, future national annual sales of vehicles within the preset range of future years. The estimated future national annual sales of vehicles within the preset range of future years are aggregated to obtain future global annual sales of vehicles within the preset range of future years. For example, taking ten years as a predicting interval, the future global sales of vehicles in future ten years are predicted on a basis of historical global sales of vehicles in the past ten years. The preset model may be the BASS model, and the preset formula of vehicle sales is expressed as:

$$Y_{c_i} = Y_{c_{i-1}} \times \frac{I_{i-1} - I_{i-10}}{I_{i-10} \times 10} \times 100\% ,$$

where $Y_c$ represents estimated future global sales of vehicles within the preset range of future years, in a unit of $10^4$; $Y_{c_i}$ represents the sales of vehicles in the $i^{th}$ year, $I_i$ represents the national per capita disposable income in the $i^{th}$ year, and the historical data is acquired from national statistics yearbooks.

In some embodiments, sales of new energy vehicles in the data of historical annual sales of vehicle within the preset range of past years is obtained to calculate annual market penetration rates of new energy vehicles within the preset range of past years through a preset formula of new energy vehicle market penetration rate. Sales of new energy vehicles in the future global annual sales of vehicles within the preset range of future years is estimated based on the calculated annual market penetration rate of new energy vehicles within the preset range of past years and the calculated future global annual sales of vehicles within the preset range of future years, and the preset formula of new energy vehicle market penetration rate. The preset formula of new energy vehicle market penetration rate is expressed as:

$$Y_{EV} = Y_c \times r_p ,$$

where $Y_{EV}$ represents the sales of new energy vehicles, in a unit of $10^4$, and $r_p$ represents a market penetration rate of new energy vehicles, in a unit of %.

In step 102, an installation quantity of traction batteries is estimated based on the sales of new energy vehicles, and a global shipment of traction batteries is calculated based on the installation quantity of traction batteries.

In some embodiments, for the fact that a traction battery is required by a new energy vehicle, the installation quantity of traction batteries is obtained based on the sales of new energy vehicles in the future global sales of vehicles as calculated in step 101, and a formula of traction battery installation quantity preset in the pre-trained model. The installation quantity of traction batteries refers to the quantity of traction batteries (individual cells) actually installed in machines (equipment using traction batteries), which is calculated as:

$$Q_I = Y_c \times r_p \times K ,$$

where $Q_I$ represents the global installation quantity of traction batteries, and K represents the installation quantity of traction batteries per 10,000 new energy vehicles, both of which are in a unit of GWh. K is determined as a product of an average cruising range (km) of new energy vehicles and an average power consumption per 100 kilometers (kWh/km) of the new energy vehicles.

As an example, a general cruising range of a traction battery of a new energy vehicle ranges from 400km to 700 km (taking 500km for calculation). The "New Energy Vehicle Industry Development Plan (2021-2035)" indicates that the power consumption per 100 kilometers shall within a range from 12kWh to 13kWh (taking 0.12 kWh/km for calculation). Therefore, the installation quantity of traction batteries per 10,000 new energy vehicles (GWh) is calculated as a product of the cruising range (km) and the power consumption per 100 kilometers (Wh/km), that is, 0.6 GWh.

In some embodiments, a historical annual shipment coefficient of traction batteries within the preset range of past years is further obtained, and a formula of traction battery shipment is set in the pre-trained model. The shipment of traction batteries is calculated through the formula of traction battery shipment, based on the installation quantity of traction batteries obtained as above. The shipment of traction batteries is calculated as:

$$Q_S = Q_I \times S$$

where $Q_s$ represents the global shipment of traction batteries, in a unit of GWh, and S represents the shipment coefficient, which is equal to an average of annual shipment coefficients of traction batteries within the preset range of past years.

In step 103, a global regular scrapping quantity of traction batteries is obtained by establishing an estimation model of the global regular scrapping quantity of traction batteries, based on the global shipment of traction batteries.

In some embodiments, a shipment year corresponding to the global shipment of traction batteries and a scrapping probability corresponding to the shipment year are obtained based on the global shipment of traction batteries, to create the estimation model of the global regular scrapping quantity of traction batteries. The global regular scrapping quantity of traction batteries is obtained through the estimation model of the global regular scrapping quantity of traction batteries.

As an example, a global shipment of traction batteries in a certain year is obtained, and then the scrapping probabilities in $n_1$, $n_2$, ..., $n_m$ years after the certain year are obtained as $P_1$, $P_2$, ..., $P_m$, respectively, where $n_m$ is greater than or equal to a rated service life L of the traction batteries, and $P_1+P_2+...+P_m=1$. Then, a future quantity of traction batteries scraped for being regularly out of services may be estimated based on the annual shipment of traction batteries. The obtained shipment year and the scrapping probability corresponding to the shipment year are used to train a preset estimation model of the global regular scrapping quantity of traction batteries, which is then used to obtain a predicted regular scrapping quantity of traction batteries. The preset estimation model of the global regular scrapping quantity of traction batteries may be the Stanford model adapted to battery products. This model estimates a scrapping quantity of a product based on sales of the product, service life of the product and life distribution of the product, and the preset estimation model of the global regular scrapping quantity of traction batteries is expressed as:

$$Q_L = \sum_i^L Q_{si} \times P_i$$

where $Q_L$ represents the regular scrapping quantity of traction batteries in a certain year, in a unit of GWh; L represents the service life of the traction battery; $Q_{si}$ represents the shipment of traction batteries in a year that is i years before the certain year; and $P_i$ represents a probability that the traction batteries produced i years ago is scrapped after i years of work.

In some embodiments, a mass of the global regular scrapping quantity of traction batteries is further calculated based on the obtained global regular scrapping quantity of traction batteries. The scrapping quantity of batteries measured in mass in a unit of $10^4$ tons is obtained based on the mass of traction batteries per GWh and a preset formula of traction battery scrap mass, which is expressed as:

$$W = Q_l \times w/10^4$$

where W represents a predicted annual regular scrapping quantity of traction batteries, in a unit of $10^4$ tons; and w represents the mass of traction batteries per GWh.

In step 104, a global scrapping quantity of leftover material of traction batteries and a global replacement scrapping quantity of traction batteries are obtained, and a prediction result of a global scrapping quantity of traction batteries is obtained based on the global regular scrapping quantity of traction batteries, the global scrapping quantity of leftover material of traction batteries and the global replacement scrapping quantity of traction batteries.

In some embodiments, a ratio of a global quantity of leftover material of traction batteries to the global shipment of traction batteries is obtained, which is used, in combination with the global regular scrapping quantity of traction batteries, to obtain the global scrapping quantity of leftover material of traction batteries. As an example, the scrapping quantity of leftover material is considered based on the predicting and analyzing the global regular scrapping quantity of traction batteries. The global scrapping quantity of leftover material of traction batteries is calculated by multiplying the global shipment of traction batteries in a year by a ratio of the quantity of leftover material of traction batteries to the shipment of traction batteries. In some embodiments, based on actual research data from enterprises, 10% is used as an average ratio of the quantity of leftover material of traction batteries to the shipment quantity of traction batteries. A formula of global scrapping quantity of leftover material of traction batteries is expressed as:

$$Q_{ll} = Q_l \times 10\%$$
,

where $Q_{ll}$ represents the scrapping quantity of leftover material of traction batteries, in a unit of GWh.

In some embodiments, the global replacement scrapping quantity of traction batteries is calculated based on a preset formula of global replacement scrapping quantity of traction batteries, expressed as:

$$Q_{mr} = \sum_i^m Q_{sj} \times r_{mr}$$
,

where $Q_{mr}$ represents the replacement scrapping quantity of traction batteries, in a unit of GWh; m represents a maintenance period, in a unit of year; j represents the $j^{th}$ year; $Q_{sj}$ represents the shipment of traction batteries in a year that is j years before the $j^{th}$ year; and $r_{mr}$ represents a maintenance replacement rate of traction batteries in the $j^{th}$ year, in a unit of %. The maintenance period of traction batteries is determined based on data obtained by enterprise research and expert interview.

In some embodiments, the prediction result of a global scrapping quantity $Q_T$ of traction batteries, in a unit of GWh, is obtained by aggregating prediction results of the global regular scrapping quantity of traction batteries, the global scrapping quantity of leftover material of traction batteries and the global replacement scrapping quantity of traction batteries. A formula for aggregating the results is expressed as:

$$Q_T = Q_L + Q_{ll} + Q_{mr}$$
.

A terminal device is further provided according to an embodiment of the present disclosure. The terminal device includes a processor, a memory and a computer program. The computer program is stored in the memory for being executed by the processor. The processor is configured to execute the computer program to perform the steps S101 to S104 in the method for predicting a global scrapping quantity of traction batteries in any one of the above embodiments.

A computer-readable storage medium is further provided according to an embodiment of the present disclosure. The computer-readable storage medium stores a computer program. The computer program, when being executed, controls a device installed with the computer-readable storage medium to perform the steps S101 to S104 in the method for predicting a global scrapping quantity of traction batteries in any one of the above embodiments.

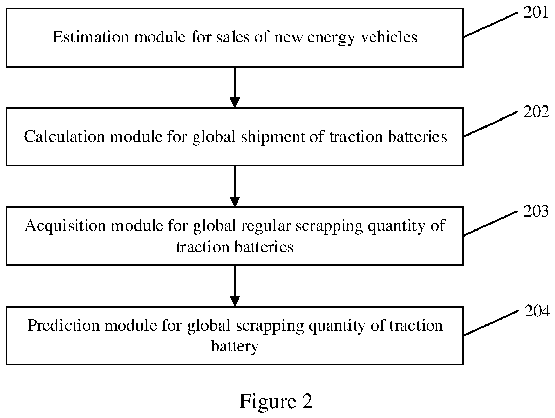

Figure 2 is a schematic structural diagram of a device for predicting a global scrapping quantity of traction batteries according to an embodiment of the present disclosure. As shown in Figure 2, the device includes an estimation module for sales of new energy vehicles 201, a calculation module for global shipment of traction batteries 202, an acquisition module for global regular scrapping quantity of traction batteries 203, and a prediction module for global scrapping quantity of traction battery 204.

The estimation module for sales of new energy vehicles 201 is configured to obtain data of historical sales of vehicles to estimate future global sales of vehicles, and estimate, based on a market penetration rate of new energy vehicles, sales of new energy vehicles contained in the future global sales of vehicles.

In some embodiments, annual data of historical national per capita annual sales of vehicles in a preset range of past years and annual growth rate of the national per capita disposable income are obtained and taken into a pre-trained model, to estimate, through a formula of vehicle sales preset in the model, future national annual sales of vehicles within the preset range of future years. The estimated future national annual sales of vehicles within the preset range of future years are aggregated to obtain future global annual sales of vehicles within the preset range of future years. For example, taking ten years as a predicting interval, the future global sales of vehicles in a period of ten years are predicted on a basis of historical global sales of vehicles in the past ten years. The preset model may be the BASS model, and the preset formula of vehicle sales is expressed as:

$$Y_{c_i} = Y_{c_{i-1}} \times \frac{I_{i-1}-I_{i-10}}{I_{i-10}\times 10} \times 100\%$$
,

where $Y_c$ represents estimated future global sales of vehicles within the preset range of future years, in a unit of $10^4$; $Y_{c_i}$ represents the sales of vehicles in the $i^{th}$ year, Ii represents the national per capita disposable income in the $i^{th}$ year, and the historical data is acquired from national statistics yearbooks.

In some embodiments, sales of new energy vehicles in the data of historical annual sales of vehicle within the preset range of past years is obtained to calculate annual market penetration rates of new energy vehicles within the preset range of past years through a preset formula of new energy vehicle market penetration rate. Sales of new energy vehicles in the future global annual sales of vehicles within the preset range of future years is estimated based on the calculated annual market penetration rate of new energy vehicles within the preset range of past years, the calculated future global annual sales of vehicles within the preset range of future years, and the preset formula of new energy vehicle market penetration rate. The preset formula of new energy vehicle market penetration rate is expressed as:

$$Y_{EV} = Y_c \times r_p ,$$

where $Y_{EV}$ represents the sales of new energy vehicles, in a unit of $10^4$, and $r_p$ represents a market penetration rate of new energy vehicles, in a unit of %.

The calculation module for global shipment of traction batteries 202 is configured to estimate an installation quantity of traction batteries based on the sales of new energy vehicles, and calculate a global shipment of traction batteries based on the installation quantity of traction batteries.

In some embodiments, for the fact that a traction battery is required by a new energy vehicle, the installation quantity of traction batteries is obtained the sales of new energy vehicles in the future global sales of vehicles, as calculated by the estimation module for sales of new energy vehicles 201, and a formula of traction battery installation quantity and preset in the pre-trained model. The installation quantity of traction batteries refers to the quantity of traction batteries (single cells) actually installed in machines (equipment using the traction batteries), which is calculated as:

$$Q_I = Y_c \times r_p \times K ,$$

where $Q_I$ represents the global installation quantity of traction batteries, and K represents the installation quantity of traction batteries per 10,000 new energy vehicles, both of which are in a unit of GWh. K is determined as a product of an average cruising range (km) of new energy vehicles and an average power consumption per 100 kilometers (kWh/km) of the new energy vehicles.

As an example, a general cruising range of a traction battery of a new energy vehicle ranges from 400km to 700 km (taking 500km for calculation). The "New Energy Vehicle Industry Development Plan (2021-2035)" indicates that the power consumption per 100 kilometers shall within a range from 12kWh to 13kWh (taking 0.12 kWh/km for calculation). Therefore, the installation quantity of traction batteries per 10,000 new energy vehicles (GWh) is calculated as a product of the cruising range (km) and the power consumption per 100 kilometers (kWh/km), that is, 0.6 GWh.

In some embodiments, a historical annual shipment coefficient of traction batteries within the preset range of past years is further obtained, and a formula of traction battery shipment is set in the pre-trained model. The shipment of traction batteries is calculated through the formula of traction battery shipment, based on the installation quantity of traction batteries obtained as above. The shipment of traction batteries is calculated as:

$$Q_S = Q_I \times S ,$$

where $Q_s$ represents the global shipment of traction batteries, in a unit of GWh, and S represents the shipment coefficient, which is equal to an average of annual shipment coefficients of traction batteries within the preset range of past years.

The acquisition module for global regular scrapping quantity of traction batteries 203 is configured to obtain a global regular scrapping quantity of traction batteries by establishing, based on the global shipment of traction batteries, an estimation model of the global regular scrapping quantity of traction batteries.

In some embodiments, a shipment year corresponding to the global shipment of traction batteries and a scrapping probability corresponding to the shipment year are obtained based on the global shipment of traction batteries, to create the estimation model of the global regular scrapping quantity of traction batteries. The global regular scrapping quantity of traction batteries is obtained through the estimation model of the global regular scrapping quantity of traction batteries.

As an example, a global shipment of traction batteries in a certain year is obtained, and then the scrapping probabilities in $n_1$, $n_2$, ..., $n_m$ years after the certain year are obtained as $P_1$, $P_2$, ..., $P_m$, respectively, where $n_m$ is greater than or equal to a rated service life L of the traction batteries, and $P_1+P_2+...+P_m=1$. Then, a future quantity of traction batteries scraped for being regularly out of services may be estimated based on the annual shipment of traction batteries. The obtained shipment year and the scrapping probability corresponding to the shipment year are used to train a preset estimation model of the global regular scrapping quantity of traction batteries, which is then used to obtain a predicted regular scrapping quantity of traction batteries. The preset estimation model of the global regular scrapping quantity of traction batteries may be the Stanford model adapted to battery products. This model estimates a scrapping quantity of a product based on sales of the product, service life of the product and life distribution of the product, and the preset estimation model of the global regular scrapping quantity of traction batteries is expressed as:

$$Q_L = \sum_i^L Q_{si} \times P_i ,$$

where $Q_L$ represents the regular scrapping quantity of traction batteries in a certain year, in a unit of GWh; L represents the service life of the traction battery; $Q_{si}$ represents the shipment of traction batteries in a year that is i years before the certain year; and $P_i$ represents a probability that the traction batteries produced i years ago is scrapped after i years of work.

In some embodiments, a mass of the global regular scrapping quantity of traction batteries is further calculated based on the obtained global regular scrapping quantity of traction batteries. The scrapping quantity of batteries measured in mass in a unit of $10^4$ tons is obtained by obtaining the mass of traction batteries per GWh and performing calculation through a preset formula of traction battery scrap mass, expressed as:

$$W = Q_l \times w/10^4,$$

where W represents a predicted annual regular scrapping quantity of traction batteries, in a unit of $10^4$ tons; and w represents the mass of traction batteries per GWh.

The prediction module for global scrapping quantity of traction battery 204 is configured to obtain a global scrapping quantity of leftover material of traction batteries and a global replacement scrapping quantity of traction batteries, and obtain a prediction result of a global scrapping quantity of traction batteries based on the global regular scrapping quantity of traction batteries, the global scrapping quantity of leftover material of traction batteries and the global replacement scrapping quantity of traction batteries.

In some embodiments, a ratio of a global quantity of leftover material of traction batteries to the global shipment of traction batteries is obtained, which is used, in combination with the global regular scrapping quantity of traction batteries, to obtain the global scrapping quantity of leftover material of traction batteries. As an example, the scrapping quantity of leftover material is considered based on the predicting and analyzing the global regular scrapping quantity of traction batteries. The global scrapping quantity of leftover material of traction batteries is calculated by multiplying the global shipment of traction batteries in a year by a ratio of the quantity of leftover material of traction batteries to the shipment of traction batteries. In some embodiments, based on actual research data from enterprises, 10% is used as an average ratio of the quantity of leftover material of traction batteries to the shipment of traction batteries. A formula of global scrapping quantity of leftover material of traction batteries is expressed as:

$$Q_{ll} = Q_L \times 10\%,$$

where $Q_{ll}$ represents the scrapping quantity of leftover material of traction batteries, in a unit of GWh.

In some embodiments, the global replacement scrapping quantity of traction batteries is calculated based on a preset formula of global replacement scrapping quantity of traction batteries, expressed as:

$$Q_{mr} = \sum_i^m Q_{sj} \times r_{mr},$$

where $Q_{mr}$ represents the replacement scrapping quantity of traction batteries, in a unit of GWh; m represents a maintenance period, in a unit of year; j represents the $j^{th}$ year; $Q_{sj}$ represents the shipment of traction batteries in a year that is j years before the $j^{th}$ year; and $r_{mr}$ represents a maintenance replacement rate of traction batteries in the $j^{th}$ year, in a unit of %. The maintenance period of traction batteries is determined based on data obtained by enterprise research and expert interview.

In some embodiments, the prediction result of a global scrapping quantity $Q_T$ of traction batteries, in a unit of GWh, is obtained by aggregating prediction results of the global regular scrapping quantity of traction batteries, the global scrapping quantity of leftover material of traction batteries and the global replacement scrapping quantity of traction batteries. A formula for aggregating the results is expressed as:

$$Q_T = Q_L + Q_{ll} + Q_{mr}.$$

In summary, a method and a device for predicting a global scrapping quantity of traction batteries are provided in the present disclosure, in which data of historical sales of vehicles is obtained to estimate future global sales of vehicles, and sales of new energy vehicles in the future global sales of vehicles is estimated based on a market penetration rate of new energy vehicles. An installation quantity of traction batteries is estimated based on the sales of new energy vehicles, and a global shipment of traction batteries is calculated based on the installation quantity of traction batteries. A global regular scrapping quantity of traction batteries is obtained by establishing, based on the global shipment of traction batteries, an estimation model of the global regular scrapping quantity of traction batteries. A global scrapping quantity of leftover material of traction batteries and a global replacement scrapping quantity of traction batteries are obtained, and a prediction result of a global scrapping quantity of traction batteries is obtained based on the global regular scrapping quantity of traction batteries, the global scrapping quantity of leftover material of traction batteries, and the global replacement scrapping quantity of traction batteries. Compared with the conventional technology, the present disclosure realizes an accurate prediction for a global scrapping quantity of traction batteries, which may improve deployment of the battery recycle industry, and promote a green, low-carbon and sustainable development of the battery industry and the new energy vehicle industry.

The description herein relates to only preferred embodiments of the present disclosure. It should be noted that improvements and substitutions may be made by those of ordinary skill in the art without departing from the technical principles of the present disclosure, and the improvements and substitutions shall be regarded within the protection scope of the present disclosure.

**Claims**

1. A method for predicting a global scrapping quantity of traction batteries, comprising:

   obtaining data of historical sales of vehicles to estimate future global sales of vehicles, and estimating, based on a market penetration rate of new energy vehicles, sales of new energy vehicles contained in the future global sales of vehicles;

   estimating an installation quantity of traction batteries based on the sales of new energy vehicles, and calculating a global shipment of traction batteries based on the installation quantity of traction batteries;

   obtaining a global regular scrapping quantity of traction batteries by establishing, based on the global shipment of traction batteries, an estimation model of the global regular scrapping quantity of traction batteries; and

   obtaining a global scrapping quantity of leftover material of traction batteries and a global replacement scrapping quantity of traction batteries, and obtaining a prediction result of the global scrapping quantity of traction batteries based on the global regular scrapping quantity of traction batteries, the global scrapping quantity of leftover material of traction batteries and the global replacement scrapping quantity of traction batteries.

2. The method for predicting the global scrapping quantity of traction batteries according to claim 1, wherein the obtaining data of historical sales of vehicles to estimate future global sales of vehicles, and estimating, based on the market penetration rate of new energy vehicles, sales of new energy vehicles contained in the future global sales of vehicles comprises:

   obtaining data of historical annual sales of vehicles within a preset range of past years, and estimating future global annual sales of vehicles within a preset range of future years;

   obtaining sales of new energy vehicles in the historical annual sales of vehicles within the preset range of past years, and calculating annual market penetration rates of new energy vehicles within the preset range of past years; and

   estimating the sales of new energy vehicles contained in the future global annual sales of vehicles within the preset range of future years, based on the annual market penetration rates of new energy vehicles within the preset range of past years.

3. The method for predicting the global scrapping quantity of traction batteries according to claim 1, wherein the obtaining the global regular scrapping quantity of traction batteries by establishing, based on the global shipment of traction batteries, the estimation model of the global regular scrapping quantity of traction batteries comprises:

   obtaining, based on the global shipment of traction batteries, a shipment year corresponding to the global shipment of traction batteries and a scrap probability corresponding to the shipment year;

   creating the estimation model of the global regular scrapping quantity of traction batteries based on the global shipment of traction batteries and the scrapping probability corresponding to the shipment year; and

   obtaining the global regular scrapping quantity of traction batteries through the estimation model of the global regular scrapping quantity of traction batteries, and calculating a mass of the global regular scrapping quantity of traction batteries.

4. The method for predicting the global scrapping quantity of traction batteries according to claim 1, wherein the obtaining the global scrapping quantity of leftover material of traction batteries and the global replacement scrapping quantity of traction batteries comprises:

   obtaining a ratio of a global quantity of leftover material of traction batteries to the global shipment of traction batteries, and obtaining the global scrapping quantity of leftover material of traction batteries based on the ratio and the global regular scrapping quantity of traction batteries; and

   calculating the global replacement scrapping quantity of traction batteries based on a preset formula of global replacement scrapping quantity of traction batteries.

5. A device for predicting a global scrapping quantity of traction batteries, comprising: an estimation module for sales of new energy vehicles, a calculation module for global shipment of traction batteries, an acquisition module for global regular scrapping quantity of traction batteries, and a prediction module for global scrapping quantity of traction battery, wherein

the estimation module for sales of new energy vehicles is configured to obtain data of historical sales of vehicles to estimate future global sales of vehicles, and estimate, based on a market penetration rate of new energy vehicles, sales of new energy vehicles contained in the future global sales of vehicles;

the calculation module for global shipment of traction batteries is configured to estimate an installation quantity of traction batteries based on the sales of new energy vehicles, and calculate a global shipment of traction batteries based on the installation quantity of traction batteries;

the acquisition module for global regular scrapping quantity of traction batteries is configured to obtain a global regular scrapping quantity of traction batteries by establishing, based on the global shipment of traction batteries, an estimation model of the global regular scrapping quantity of traction batteries; and

the prediction module for global scrapping quantity of traction battery is configured to obtain a global scrapping quantity of leftover material of traction batteries and a global replacement scrapping quantity of traction batteries, and obtain a prediction result of the global scrapping quantity of traction batteries based on the global regular scrapping quantity of traction batteries, the global scrapping quantity of leftover material of traction batteries and the global replacement scrapping quantity of traction batteries.

6. The device for predicting the global scrapping quantity of traction batteries according to claim 5, wherein the estimation module for sales of new energy vehicles is configured to:

obtain data of historical annual sales of vehicles within a preset range of past years, and estimate future global annual sales of vehicles within the preset range of future years;

obtain sales of new energy vehicles in the historical annual sales of vehicles within the preset range of past years, and calculate annual market penetration rates of new energy vehicles within the preset range of past years; and

estimate the sales of new energy vehicles contained in the future global annual sales of vehicles within the preset range of future years, based on the annual market penetration rates of new energy vehicles within the preset range of past years.

7. The device for predicting the global scrapping quantity of traction batteries according to claim 5, wherein the acquisition module for global regular scrapping quantity of traction batteries is configured to:

obtain, based on the global shipment of traction batteries, a shipment year corresponding to the global shipment of traction batteries and a scrapping probability corresponding to the shipment year;

create the estimation model of the global regular scrapping quantity of traction batteries based on the global shipment of traction batteries and the scrapping probability corresponding to the shipment year; and

obtain the global regular scrapping quantity of traction batteries through the estimation model of the global regular scrapping quantity of traction batteries, and calculate a mass of the global regular scrapping quantity of traction batteries based on the global regular scrapping quantity of traction batteries.

8. The device for predicting the global scrapping quantity of traction batteries according to claim 5, wherein the prediction module for global scrapping quantity of traction battery is configured to:

obtain a ratio of a global quantity of leftover material of traction batteries to the global shipment of traction batteries, and obtain the global scrapping quantity of leftover material of traction batteries based on the ratio and the global regular scrapping quantity of traction batteries; and

calculate the global replacement scrapping quantity of traction batteries based on a preset formula of global replacement scrapping quantity of traction batteries scrapping quantity.

9. A terminal device, comprising a processor, a memory, and a computer program stored in the memory for being executed by the processor, wherein the processor is configured to execute the computer program to perform the method for predicting a global scrapping quantity of traction batteries according to any one of claims 1 to 4.

10. A computer-readable storage medium, storing a computer program, wherein the computer program, when being executed, controls a device installed with the computer-readable storage medium to perform the method for predicting a global scrapping quantity of traction batteries according to any one of claims 1 to 4.

Obtain data of historical sales of vehicles to estimate future global sales of vehicles, and estimate sales of new energy vehicles contained in the future global sales of vehicles based on a market penetration rate of new energy vehicles ⟋ 101

Estimate an installation quantity of traction batteries based on the sales of new energy vehicles, and calculate a global shipment of traction batteries based on the installation quantity of traction batteries ⟋ 102

Obtain a global regular scrapping quantity of traction batteries by establishing an estimation model of the global regular scrapping quantity of traction batteries, based on the global shipment of traction batteries ⟋ 103

Obtain a global scrapping quantity of leftover material of traction batteries and a global replacement scrapping quantity of traction batteries, and obtain a prediction result of a global scrapping quantity of traction batteries based on the global regular scrapping quantity of traction batteries, the global scrapping quantity of leftover material of traction batteries and the global replacement scrapping quantity of traction batteries ⟋ 104

Figure 1

| Estimation module for sales of new energy vehicles | 201 |

↓

| Calculation module for global shipment of traction batteries | 202 |

↓

| Acquisition module for global regular scrapping quantity of traction batteries | 203 |

↓

| Prediction module for global scrapping quantity of traction battery | 204 |

Figure 2

## INTERNATIONAL SEARCH REPORT

| International application No. |
|---|
| **PCT/CN2022/108660** |

### A. CLASSIFICATION OF SUBJECT MATTER

G06Q 50/26(2012.01)i

According to International Patent Classification (IPC) or to both national classification and IPC

### B. FIELDS SEARCHED

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

CNKI, CNPAT, WPI, EPODOC, IEEE, BING: 动力, 电池, 历史, 报废量, 退役量, 估算, 预测, 斯坦福, 边角料, 存换, 更换, power, battery, histor+, bass, scrap+, retir+, amount, estimat+, predict+, stanford, cut off, replac+

### C. DOCUMENTS CONSIDERED TO BE RELEVANT

| Category* | Citation of document, with indication, where appropriate, of the relevant passages | Relevant to claim No. |
|---|---|---|
| PX | CN 114004634 A (GUANGDONG BRUNP RECYCLING TECHNOLOGY CO., LTD. et al.) 01 February 2022 (2022-02-01) claims 1-10, and figures 1 and 2 | 1-10 |
| X | 彭结林 等 (PENG, Jielin et al.). "基于Stanford模型的动力电池报废量估算研究 (Research on Waste Amount of Power Batteries Based on Stanford Model)" 机械制造与自动化 *(Machine Building & Automation),* Vol. 47, No. 05, 31 October 2018 (2018-10-31), page 207, section 2.1, paragraph 1 to page 208, section 2.2, last paragraph | 1-10 |
| A | CN 108287865 A (STATE GRID BEIJING ELECTRIC POWER COMPANY et al.) 17 July 2018 (2018-07-17) entire document | 1-10 |
| A | CN 112613679 A (YIXING POWER SUPPLY BRANCH STATE GRID JIANGSU ELECTRIC POWER CO., LTD.) 06 April 2021 (2021-04-06) entire document | 1-10 |
| A | US 2008147486 A1 (LEHIGH UNIVERSITY) 19 June 2008 (2008-06-19) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 October 2022** | **27 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/108660**

**C.     DOCUMENTS CONSIDERED TO BE RELEVANT**

| Category* | Citation of document, with indication, where appropriate, of the relevant passages | Relevant to claim No. |
|---|---|---|
| A | CN 110807266 A (SHANGHAI POLYTECHNIC UNIVERSITY) 18 February 2020 (2020-02-18) <br> entire document | 1-10 |

**INTERNATIONAL SEARCH REPORT**
Information on patent family members

International application No.

**PCT/CN2022/108660**

| Patent document cited in search report | | | Publication date (day/month/year) | Patent family member(s) | Publication date (day/month/year) |
|---|---|---|---|---|---|
| CN | 114004634 | A | 01 February 2022 | None | |
| CN | 108287865 | A | 17 July 2018 | None | |
| CN | 112613679 | A | 06 April 2021 | None | |
| US | 2008147486 | A1 | 19 June 2008 | None | |
| CN | 110807266 | A | 18 February 2020 | None | |

Form PCT/ISA/210 (patent family annex) (January 2015)